# EUROPEAN PATENT APPLICATION

(11) **EP 3 716 430 A1**
(43) Date of publication of application: **30.09.2020**
(21) Application number: 19165410.2
(22) Date of filing: 27.03.2019
(51) Int. Cl.: H02G 15/068, H02G 3/06

(54) **METHOD OF PROVIDING EMC PROTECTION FOR ELECTRIC CABLE ASSEMBLY, AND EMC PROTECTED ELECTRIC CABLE ASSEMBLY MANUFACTURED BY SAID METHOD**

(71) Applicant: ABB Schweiz AG, 5400 Baden (CH)
(72) Inventor: Kääpä, Matti, 00380 Helsinki (FI); Nygren, Toni, 00380 Helsinki (FI); Tuulenmäki, Tommi, 00380 Helsinki (FI)
(74) Representative: Kolster Oy Ab

(57) **Abstract**

A method of providing an EMC protection for an electric cable assembly comprising a cable inlet (2) and an electric cable (4). The method comprises providing an EMC protection element (6) from electrically conductive and flexible material, bending the EMC protection element (6) into a tubular form having a centre line, inserting the EMC protection element (6) having the tubular form into an inlet aperture (25) of the cable inlet (2), and expanding the EMC protection element (6) in a direction perpendicular to the centre line in order to provide an electrically conductive connection between the EMC protection element and the cable inlet.

## Description

### FIELD OF THE INVENTION

The present invention relates to a method of providing an EMC protection for an electric cable assembly, and to an EMC protected electric cable assembly manufactured by the method.

Herein an EMC protection means a structure adapted to reduce unintentional propagation and reception of electromagnetic energy in an electric cable assembly. The abbreviation EMC refers to electromagnetic compatibility, which is a branch of electrical engineering.

A known method of providing an EMC protection for an electric cable assembly comprises installing a braided shielding element around an electric cable of the electric cable assembly.

One of the problems associated with braided shielding elements is that they are not well suited for retrofitting because installing a braided shielding element requires disconnecting the electric cable around which the braided shielding element is to be installed.

### BRIEF DESCRIPTION OF THE INVENTION

An object of the present invention is to provide a method of manufacturing an EMC protection for an electric cable assembly so as to overcome the above problem. The objects of the invention are achieved by a method which is characterized by what is stated in the independent claim 1. The preferred embodiments of the invention are disclosed in the dependent claims.

The invention is based on the idea of providing a flexible EMC protection element, bending the flexible EMC protection element into a tubular form, and inserting the EMC protection element having the tubular form into an inlet aperture of a cable inlet in order to provide an electrically conductive connection between the EMC protection element and the cable inlet. In an embodiment the EMC protection element is manufactured of sheet material by stamping.

An advantage of the method of the invention is that the method enables retrofitting an EMC protection for an electric cable assembly without disconnecting electric cable(s) of the assembly. The method of the invention also provides an EMC protection which is inexpensive and durable, and requires only little space. Further, in the method of the invention it is possible to use one type of EMC protection element for electric cables having different diameters. In connection with smaller cables, an EMC protection element can be cut to a length appropriate for a circumference of the electric cable or simply be bent such that it overlaps itself at least partially.

### BRIEF DESCRIPTION OF THE DRAWINGS

In the following the invention will be described in greater detail by means of preferred embodiments with reference to the attached drawings, in which
Figure 1 shows an EMC protection element in an unbent form thereof;
Figure 2 illustrates a phase of a method of providing an EMC protection for an electric cable assembly according to an embodiment of present invention;
Figure 3 illustrates another phase of the method; and
Figure 4 illustrates the method phase of Figure 3 as a cross section.

### DETAILED DESCRIPTION OF THE INVENTION

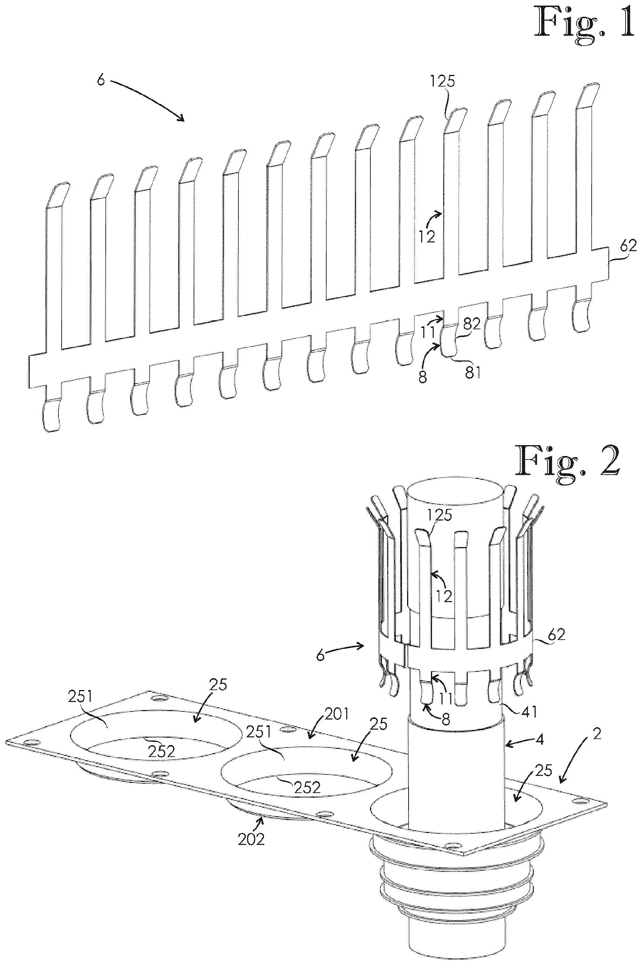

Figure 1 shows an EMC protection element 6 comprising an element body 62 extending in a body direction, a plurality of first projections 11 protruding from the element body 62 in a first transverse direction relative to the body direction, and a plurality of second projections 12 protruding from the element body 62 in a second transverse direction relative to the body direction. The second transverse direction is opposite to the first transverse direction. Both the first transverse direction and the second transverse direction are perpendicular to the body direction.

The EMC protection element 6 has been manufactured of spring steel sheet by stamping. In an alternative embodiment an EMC protection element is manufactured of another electrically conductive and flexible material by a suitable manufacturing method.

In Figure 1 the EMC protection element 6 is in an unbent form thereof such that the body direction is a linear direction. In the unbent form the EMC protection element 6 is almost a planar element. A plurality of unbent EMC protection elements 6 can be stacked such that they require only little storage space.

Each of the plurality of first projections 11 has grip member 8 comprising a free end of the first projection 11. Each grip member 8 has a tip section 81 comprising the free end of the first projection 11, and an intermediate section 82 located between the tip section 81 and the element body 62. The tip section 81 and the intermediate section 82 are spaced apart in a direction perpendicular to both the body direction of the element body 62 and the first transverse direction.

Each of the plurality of second projections 12 has a stop member 125 comprising a free end of the second projection 12. The stop member 125 protrudes in a stop member direction perpendicular to both the body direction of the element body 62 and the second transverse direction.

Figure 2 shows an electric cable assembly comprising a cable inlet 2 and an electric cable 4, and the EMC protection element 6 of Figure 1 bent into a tubular form having a centre line extending in a longitudinal direction such that the body direction of the element body 62 surrounds the centre line of the tubular form. Both the plurality of first projections 11 and the plurality of second projections 12 extend in the longitudinal direction of the tubular form. The EMC protection element 6 is located at a distance from the cable inlet 2.

In the tubular form of the EMC protection element 6 shown in Figure 2, the tip section 81 of each grip member 8 is located further from the centre line of the tubular form than the intermediate section 82. The stop member direction of each stop member 125 is parallel to an outwards direction of the tubular form, the outwards direction of the tubular form being perpendicular to the longitudinal direction of the tubular form, and directed away from the centre line of the tubular form. The stop member 125 of each second projection 12 is located further from the centre line of the tubular form than the element body 62.

In Figure 2 the body direction of the element body 62 surrounds by substantially 360° the centre line of the tubular form. The angle by which the body direction of the element body surrounds the centre line of the tubular form is selected such that an appropriate EMC protection is achieved. In some embodiments a 350° angle is sufficient. Further, it is possible to use an angle greater than 360°, in which case the element body overlaps itself at least partially.

The EMC protection element 6 shown in Figure 1 can be used for electric cables having a wide variety of circumferences. If the EMC protection element 6 is not allowed to overlap itself, the EMC protection element 6 can easily be cut to a length appropriate for a circumference of the electric cable in question, the length being a dimension parallel to the body direction.

The electric cable 4 has a shield layer 41, which is an electrically conductive layer. In Figure 2 the shield layer 41 is exposed.

The cable inlet 2 is made of electrically conductive material, and comprises an inlet aperture 25 having a mouth and providing a passage from a first side 201 of the cable inlet 2 to a second side 202 of the cable inlet 2 in an axial direction of the cable inlet 2. The inlet aperture 25 has a first inlet section 251 having a first surface area and located at a first distance from the mouth in the axial direction of the cable inlet 2, and a second inlet section 252 having a second surface area and located at a second distance from the mouth in the axial direction of the cable inlet 2, the second distance being greater than the first distance, and the second surface area being greater than the first surface area. Both the first surface area and the second surface area are defined on a plane perpendicular to the axial direction, and both of them have a substantially circular shape.

In the embodiment of Figure 2, the second inlet section 252 is a portion of inner surface of the inlet aperture 25. In an alternative embodiment the second inlet section is simply a free space adjacent the first inlet section, the free space being adapted to allow expanding the grip members 8 in a direction perpendicular to the axial direction of the cable inlet 2.

Figures 2 to 4 illustrate a method according to an embodiment of the invention, in which the EMC protection element 6 of Figure 1 is used to provide an EMC protection for the electric cable assembly, thereby providing an EMC protected electric cable assembly.

In Figure 2, the electric cable 4 has been introduced into the inlet aperture 25 such that the electric cable 4 passes through the cable inlet 2. The EMC protection element 6 having the tubular form has been placed around the electric cable 4 after the electric cable 4 was introduced into the inlet aperture 25.

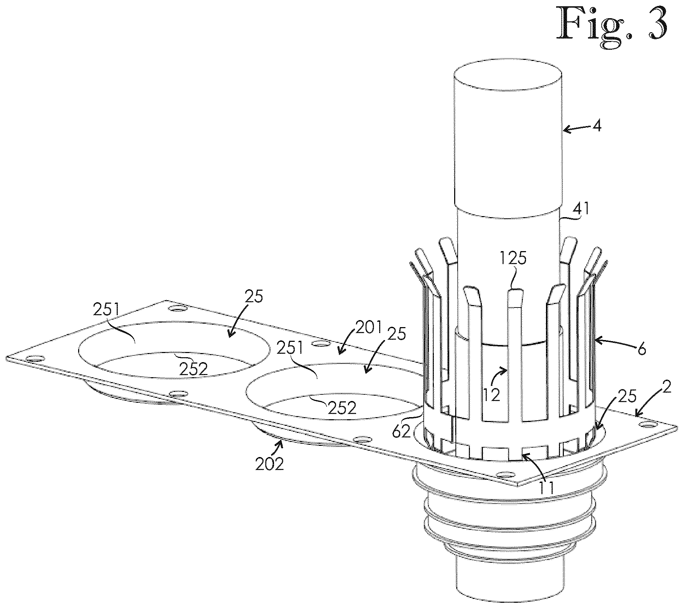

In Figure 3, the EMC protection element 6 having the tubular form has been inserted into the inlet aperture 25 of the cable inlet 2 such that the longitudinal direction of the tubular form is substantially parallel to the axial direction of the cable inlet 2. The tubular form is oriented such that the plurality of first projections 11 has entered the cable inlet 2 first. The EMC protection element 6 has been inserted into the inlet aperture 25 until the free ends of the first projections 11 have passed the first inlet section 251 such that the grip members 8 have reached an operational depth.

Prior to inserting the EMC protection element 6 into the inlet aperture 25 of the cable inlet 2, the EMC protection element 6 had been bent into a tubular form whose cross-sectional area enabled inserting the EMC protection element 6 into the inlet aperture 25. Herein a tubular form refers to any form suitable for inserting the EMC protection element into the inlet aperture. In alternative embodiments said suitable form is a truncated cone or a substantially cylindrical form, for example.

After the grip members 8 have reached the operational depth, the grip members 8 are expanded in a direction perpendicular to the axial direction of the cable inlet 2 such that the grip members 8 reach a cooperation position relative to the cable inlet 2. The cooperation position provides an electrically conductive connection between the EMC protection element 6 and the cable inlet 2, and is adapted to resist movement of the EMC protection element 6 in an extraction direction relative to the cable inlet 2 by means of cooperation between the grip members 8 and the first inlet section 251. The cooperation position between the grip members 8 and the cable inlet 2 resists movement of the EMC protection element 6 in the extraction direction relative to the cable inlet 2 due to friction between the grip members 8 and inner surface of the inlet aperture 25.

When the grip members 8 are in the cooperation position relative to the cable inlet 2, a surface area defined by the free ends of the first projections 11 is greater than the first surface area of the first inlet section 251. In other words, it is not possible to pull the EMC protection element 6 out of the cable inlet 2 without contact between the tip sections 81 and the first inlet section 251 of the inlet aperture 25, and said contact induces friction resisting the pulling out event.

The extraction direction is parallel to the axial direction of the cable inlet 2 and directed from the second inlet section 252 towards the first inlet section 251. In Figure 3 the extraction direction is an upwards direction.

Expanding the grip members 8 comprises allowing the EMC protection element 6 having the tubular form to freely expand in a direction perpendicular to the centre line of the tubular form, wherein the expansion is achieved by the flexibility of the EMC protection element 6. Due to the flexible material thereof, the EMC protection element 6 tends to unroll unless there are forces exerted to it that are directed to maintain the tubular form.

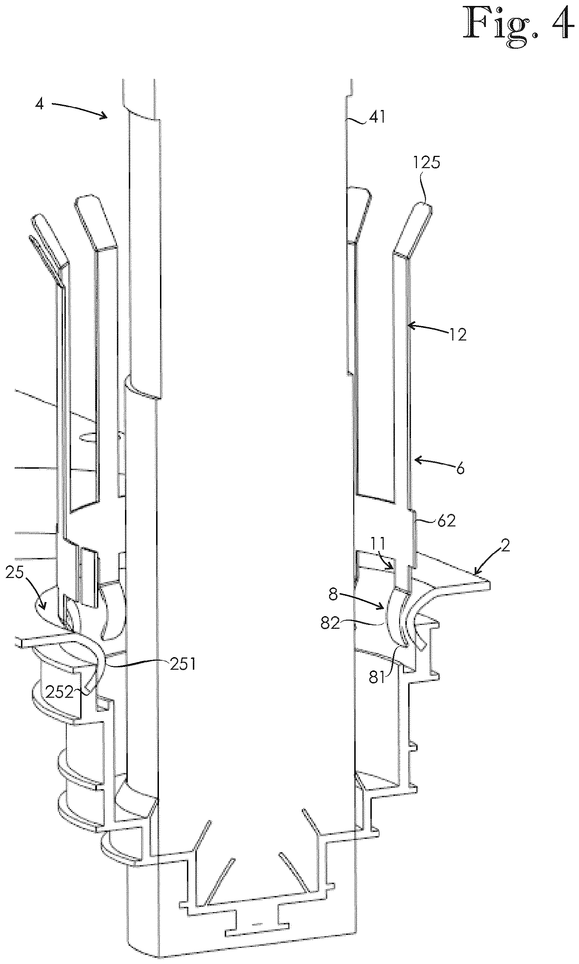

Figure 4 illustrates the method phase of Figure 3 as a cross section, and shows that the grip members 8 are in contact with an inner surface of the inlet aperture 25. Figure 4 also shows that form of the grip members 8 match the form of the inlet aperture 25 such that contact area between the grip members 8 and the inlet aperture 25 is maximised.

In an embodiment of the invention the plurality of second projections 12 are pressed against the shield layer 41 of the electric cable 4 in order to provide an electrically conductive connection between the plurality of second projections 12 and the shield layer 41 of the electric cable 4. The pressing of the plurality of second projections 12 against the shield layer 41 of the electric cable 4 is carried out by a securing member (not shown) such as a cable tie between the element body 62 and the stop members 125. The securing member prevents unrolling of the EMC protection element 6. The stop members 125 prevent the securing member from moving outside the second projections 12 in the longitudinal direction of the EMC protection element 6 having the tubular form.

In an alternative embodiment the securing member comprises a piece of adhesive tape. In such an embodiment, the stop members are not necessary since the piece of adhesive tape is adhered to the EMC protection element, and therefore the piece of adhesive tape cannot move relative to the EMC protection element.

In an embodiment expanding the grip members comprise tightening the securing member around the EMC protection element at a location spaced apart from the grip members in the longitudinal direction in order to provide a form of a truncated cone for the EMC protection element. Tightening the securing member increases a surface area defined by the free ends of the first projections due to the flexibility of the EMC protection element, as long as the pressing location is sufficiently removed from the free ends in the longitudinal direction.

It will be obvious to a person skilled in the art that the inventive concept can be implemented in various ways. The invention and its embodiments are not limited to the examples described above but may vary within the scope of the claims.

## Claims

1. A method of providing an EMC protection for an electric cable assembly, the electric cable assembly comprising:
a cable inlet (2) comprising an inlet aperture (25) having a mouth and providing a passage from a first side (201) of the cable inlet (2) to a second side (202) of the cable inlet (2) in an axial direction of the cable inlet (2), the inlet aperture (25) having a first inlet section (251) having a first surface area and located at a first distance from the mouth in the axial direction of the cable inlet (2), and a second inlet section (252) having a second surface area and located at a second distance from the mouth in the axial direction of the cable inlet (2), the second distance being greater than the first distance, and the second surface area being greater than the first surface area, wherein both the first surface area and the second surface area are defined on a plane perpendicular to the axial direction; and
an electric cable (4),
the method comprising:
introducing the electric cable (4) into the inlet aperture (25) such that the electric cable (4) passes through the cable inlet (2);
providing an EMC protection element (6) from electrically conductive and flexible material, the EMC protection element (6) comprising an element body (62) extending in a body direction, a plurality of first projections (11) protruding from the element body (62) in a first transverse direction relative to the body direction, each of the plurality of first projections (11) having a free end and grip member (8) adapted to cooperate with the first inlet section (251) of the inlet aperture (25), the grip member (8) comprising the free end of the first projection (11);
bending the EMC protection element (6) into a tubular form having a centre line extending in a longitudinal direction such that the body direction of the element body (62) surrounds the centre line of the tubular form, and the plurality of first projections (11) extends in the longitudinal direction of the tubular form;
inserting the EMC protection element (6) having the tubular form into the inlet aperture (25) of the cable inlet (2) such that the longitudinal direction of the tubular form is substantially parallel to the axial direction of the cable inlet (2), the tubular form being oriented such that the plurality of first projections (11) enter the cable inlet (2) first, the EMC protection element (6) is inserted into the inlet aperture (25) until the free ends of the first projections (11) have passed the first inlet section (251) such that the grip members (8) have reached an operational depth; and
expanding the grip members (8) in a direction perpendicular to the axial direction of the cable inlet (2) such that the grip members (8) reach a cooperation position relative to the cable inlet (2), the cooperation position providing an electrically conductive connection between the EMC protection element (6) and the cable inlet (2), and being adapted to resist movement of the EMC protection element (6) in an extraction direction relative to the cable inlet (2) by means of cooperation between the grip members (8) and the first inlet section (251), the extraction direction being parallel to the axial direction of the cable inlet (2) and directed from the second inlet section (252) towards the first inlet section (251).

2. A method according to claim 1, **characterized in that** expanding the grip members (8) comprise allowing the EMC protection element (6) having the tubular form to freely expand in a direction perpendicular to the centre line of the tubular form, wherein the expansion is achieved by the flexibility of the EMC protection element (6).

3. A method according to claim 1 or 2, **characterized in that** each grip member (8) has a tip section (81) comprising the free end of the first projection (11), and an intermediate section (82) located between the tip section (81) and the element body (62), the tip section (81) and the intermediate section (82) being spaced apart in a direction perpendicular to both the body direction of the element body (62) and the first transverse direction, the EMC protection element (6) being bent into the tubular form such that the tip sections (81) are located further from the centre line of the tubular form than the intermediate sections (82).

4. A method according to any one of preceding claims, **characterized in that** the tip sections (81) are located further from the centre line of the tubular form than the element body (62).

5. A method according to claim 3 or 4, **characterized in that** the element body (62) is located further from the centre line of the tubular form than the intermediate sections (82).

6. A method according to claim 1, **characterized in that** the EMC protection element (6) has a plurality of second projections (12) protruding from the element body (62) in a second transverse direction relative to the body direction, the second transverse direction being opposite to the first transverse direction, each of the plurality of second projections (12) having a free end, the method comprising pressing the plurality of second projections (12) against a shield layer (41) of the electric cable (4) in order to provide an electrically conductive connection between the plurality of second projections (12) and the shield layer (41) of the electric cable (4).

7. A method according to claim 6, **characterized in that** each of the plurality of second projections (12) has a stop member (125) comprising the free end of the second projection (12), the stop member protruding in a stop member direction perpendicular to both the body direction of the element body (62) and the second transverse direction, the EMC protection element (6) being bent into the tubular form such that each stop member (125) is located further from the centre line of the tubular form than the element body (62), wherein the pressing of the plurality of second projections (12) against the shield layer (41) of the electric cable (4) is carried out by a securing member between the element body (62) and the stop members (125).

8. A method according to any one of the preceding claims, **charac** - **terized** in that each of the grip members (8) has a form matched with the form of the inlet aperture (25) in order to increase contact area between the grip members (8) and the inlet aperture (25) during the cooperation between the grip members (8) and the first inlet section (251).

9. A method according to any one of the preceding claims, **characterized in that** the EMC protection element (6) is manufactured of sheet material.

10. A method according to claim 9, **characterized in that** providing the EMC protection element (6) comprises stamping the sheet material.

11. A method according to claim 9 or 10, **characterized in that** the method comprises cutting the EMC protection element (6) to a length appropriate for a circumference of the electric cable (4), the length being a dimension parallel to the body direction.

12. An EMC protected electric cable assembly manufactured by a method according to any one of claims 1 to 11.
